Europäisches Patentamt

European Patent Office

Office européen des brevets

(19)

(11) Veröffentlichungsnummer: **0 205 813**
**A2**

(12) **EUROPÄISCHE PATENTANMELDUNG**

(21) Anmeldenummer: 86105555.6

(22) Anmeldetag: 22.04.86

(51) Int. Cl.4: **B01D 53/36** , B01J 29/08 ,
B01J 35/04 , B01J 37/00

(30) Priorität: 22.04.85 DE 3514452
13.07.85 DE 3525132
28.11.85 DE 3542081
01.04.86 DE 3610790

(43) Veröffentlichungstag der Anmeldung:
**30.12.86 Patentblatt 86/52**

(84) Benannte Vertragsstaaten:
**AT BE CH DE FR GB IT LI NL SE**

(71) Anmelder: **Rennebeck, Klaus**
**Blumenstrasse 16**
**D-7317 Wendlingen(DE)**

(72) Erfinder: **Die Erfinder haben auf ihre**
**Nennung verzichtet**

(74) Vertreter: **Patentanwälte Ruff und Beier**
**Neckarstrasse 50**
**D-7000 Stuttgart 1(DE)**

(54) **Katalysator, insbesondere für die Abgasreinigung, Verfahren und Vorrichtung zu seiner Herstellung.**

(57) Die Erfindung betrifft einen Katalysator, der insbesondere für die Abgasreinigung geeignet ist und mindestens teilweise aus geformtem Zeolith besteht, und zwar vorzugsweise in Form eines Wabenkörpers mit hohem frelem Durchgangsquerschnitt. Die Erfindung betrifft auch ein Verfahren zur Herstellung des Katalysators durch Formen in feuchtem Zustand mit einem Bindemittel und anschließendes Trocknen sowie eine Vorrichtung zur Herstellung des Katalysatorkörpers mit einer Unterstützungsfläche, die den Katalysator auf einer besonders großen Fläche unterstützt, solange er noch nicht verfestigt ist.

FIG.1

## Katalysator, insbesondere für die Abgasreinigung, Verfahren und Vorrichtung zu seiner Herstellung

Die Erfindung betrifft einen Katalysator, insbesondere für die Abgasreinigung, sowie ein Verfahren und eine Vorrichtung zu seiner Herstellung.

Die Reinigung von Abgasen, insbesondere Rauchgasen, wird aus Gründen des Umweltschutzes angestrebt und ist teilweise auch gesetzlich vorgeschrieben. Wichtig sind bei der Abgasreinigung vor allem die Entschwefelung und die Beseitigung von Stickoxiden. Solche Verfahren sind bekannt. So beschreibt die deutsche Patentschrift 24 58 888, auf die Bezug genommen wird, ein Verfahren zur katalytischen Reduktion von Stickoxiden zu Stickstoff. Die Katalysatoren können verschiedene Formen haben, beispielsweise pulverförmig, als Granulat oder in Form von Wabenkörpern vorliegen. Ein solcher Wabenkörper ist in der deutschen Patentschrift 26 58 539 beschrieben.

Es wurde gefunden, daß sich Alumo-Silikate als Katalysatoren bzw. Katalysatorträger besonders eignen, da sie aufgrund ihrer Kristallstruktur die Eigenschaften von Molekularsieben haben. Diese Eigenschaften, die bei Zeolithen besonders ausgeprägt sind, machen die Alumo-Silikate in hervorragender Weise geeignet für die Entgiftung von Abgasen. Bisher werden Zeolithe in der Petrochemie zum Cracken von Kohlenwasserstoffen verwendet.

Die erfindungsgemäßen Katalysatoren, die insbesondere zur Reinigung von Abgasen bestimmt sind, bestehen mindestens teilweise aus geformtem Zeolith. Vorzugsweise hat der Katalysator die Form eines Katalysatorkörpers, der Durchtrittskanäle für mindestens einen Fluidstrom aufweist und insbesondere einen Wabenkörper ist. Bei einer besonderen Ausführungsform kann der Katalysatorkörper Durchtrittskanäle für mindestens zwei voneinander getrennte Fluidströme aufweisen. Mit einem solchen Katalysatorkörper, der mit Vorteil als Wärmetauscher ausgebildet sein kann, ist es möglich, einen oder mehrere Fluidströme durch katalytische Reaktionen zu verändern, insbesondere zu reinigen, und gleichzeitig Wärme von einem Fluidstrom auf einen anderen zu übertragen. Aufgrund der besonderen Molekularsiebeigenschaften des Zeoliths ist es jedoch auch möglich, selektiv bestimmte Stoffe von einem Fluidstrom in einen anderen zu überführen, so zum Beispiel Wasser, das durch den Zeolith zu diffundieren vermag.

Der Zeolith liegt vorzugsweise an der Oberfläche des Katalysatorkörpers frei oder in besonders hoher Konzentration. Dies kann dadurch erreicht werden, daß ein an sich bekannter Katalysatorkörper aus herkömmlichem Material, beispielsweise Keramik, an der Oberfläche mit Zeolith beschichtet ist. Der Katalysatorkörper kann jedoch auch vollständig aus Zeolith bzw. einer Zeolith enthaltenden Mischung hergestellt sein. Bei der Herstellung aus Mischungen ist es von Vorteil, wenn der Zeolith an der Oberfläche des Katalysatorkörpers mit einer höheren Konzentration vorliegt als im Inneren des Formkörpers.

Katalysatorkörper nach der Erfindung sind besonders solche, die einen freien Durchgangsquerschnitt für das Fluid von mehr als 80 % besitzen. Solche Katalysatorkörper bzw. Wabenkörper haben einen sehr geringen hydraulischen Widerstand und verursachen dadurch nur einen geringen Druckverlust. Die Wandstärke der Kanalwandungen liegt dabei unter einem Millimeter, vorzugsweise bei 0,05 -0,8 mm. Diese Katalysatorkörper haben ein günstiges Verhältnis von Gesamtinnenumfang der Kanäle zur Querschnittsfläche des Katalysatorkörpers (Größenordnung ca. 0,5 mm/mm²), da wegen der dünnen Kanalwandungen eine Vielzahl von Kanälen unterzubringen ist. Die Katalysatorkörper können auch aus herkömmlichen Materialien bestehen, d.h. zeolithfrei sein.

Beim erfindungsgemäßen Katalysatorkörper ist der Zeolith vorzugsweise durch ein Bindemittel gebunden, das die aktive Oberfläche des Zeoliths vorzugsweise nicht oder nur unwesentlich verkleinert. Solche Bindemittel sind vorzugsweise feste Bindemittel, die bei den Herstellungs-und Betriebstemperaturen noch nicht sintern.

Als Bindemittel bevorzugt ist keramisch plastisches Material, wie Ton, insbesondere titanreicher Ton. Ein Ton mit einem Titanoxidgehalt von mindestens 1 %, vorzugsweise 2 -5 Gew.-%, berechnet als Titandioxid, ist besonders geeignet.

Ungebundener Zeolith ist praktisch nicht formbar und instabil. Überraschenderweise werden mit den keramisch plastischen Materialien jedoch sehr gute Formungs-und Stabilitätsergebnisse erhalten, worauf noch eingegangen wird. Der Gehalt an Bindemittel hängt von der gewünschten Festigkeit des Katalysatorkörpers ab. In der Regel enthält der Katalysatorkörper 1 -30 Gew.-%, insbesondere 5 - 15 Gew.-% Zeolith und 99 -70 Gew.-%, insbesondere 95 -85 Gew.-% Bindemittel, bezogen auf die lufttrockene Gesamtmenge von Zeolith und Bindemittel.

Der als Katalysator bzw. Katalysatorträger verwendete Zeolith kann Modernith, Hollandith, Chabasith sein und ist vorzugsweise ein solcher vom Faujasit-Typ und besitzt eine sog. SBU-Struktur. Synthetische Zeolithe haben sich als vorteilhaft erwiesen. Die Molekularsiebeigenschaften der Zeolithe können durch Einstellen der Porenweite des Kristallgitters gezielt variiert werden und zwar insbesondere durch Kationenaustausch. Die Kationen des Zeoliths sind vorzugsweise Ammonium oder aus den Gruppen der Alkali-Erdalkali-oder seltenen Erdmetalle ausgewählt und sind gegeneinander austauschbar. So sind die Natriumionen des als Ausgangsmaterials vorzugsweise verwendeten Natriumzeoliths (z.B. Na-Y-Zeolith) mit Vorteil mindestens teilweise, vorzugsweise zu 5 -15 % durch Calciumionen und/oder lonen von seltenen Erden ausgetauscht, wobei verschiedene lonen gemischt vorhanden sein können.

Zur Durchführung gezielter katalytischer Reaktionen kann der Zeolith mit katalytisch wirksamen Elementen oder Verbindungen belegt sein. Vorzugsweise ist die Belegung in der Weise vorgenommen, daß die Elemente oder Verbindungen an den Innenwänden der Poren des Zeoliths, d.h. im Zeolithfenster, vorhanden sind. Eine solche Poreninnenbelegung mit katalytisch aktivem Material, bei der vorzugsweise zum überwiegenden Teil im Poreninneren solches katalytisches Material vorliegt, erlaubt gezielte chemische Reaktionen. Es werden nämlich dann nur solche Stoffe verändert, die aufgrund ihrer Größe in das vorbestimmte Zeolithfenster passen. Größere Stoffe, die nicht in das Poreninnere eindringen können, bleiben im wesentlichen unverändert, auch wenn das katalytische Material als solches an sich geeignet wäre, diese Stoffe zu verändern.

Die auf diese Weise modifizierten Zeolithe können für ihren Einsatz in Pulverform, in Form einer Oberflächenbeschichtung und auch in Form eines aus dem Zeolith unter Verwendung eines Bindemittels geformten Katalysatorkörpers, insbesondere Wabenkörpers, eingesetzt werden.

Molekularsiebmaterialien zeigen eine sehr - schlechte Verarbeitbarkeit, was ihren Einsatz als geformte oder beschichtete Körper beeinträchtigt. Molekularsiebmaterialien und damit auch die entsprechenden Zeolithe sind thixotrop, d.h. sie lassen sich nicht ohne Zusatz von Bindemitteln in mechanisch-stabile Formkörper, insbesondere Wabenkörper verformen. Bindemittel führen jedoch häufig zu einer unerwünscht starken Beeinträchtigung der Molekularsiebeigenschaften. Es wurde nun gefunden, daß die als nachteilig empfundenen thixotropen Eigenschaften der Molekularsiebe in vorteilhafter Weise ausgenutzt werden können, indem das Zeolithpulver zusammen mit einem Bindemittel in feuchtem Zustand geformt und getrocknet wird. Hierbei erfolgt das Formen vorzugsweise unter Anwendung von Druck nach Art eines Fließvorganges. Durch den auf das Materialgemisch ausgeübten Druck wird das Molekularsiebmaterial thixotrop und aufgrund dieser erhöhten Fließfähigkeit bevorzugt an die Oberfläche des Formkörpers geschwemmt. Dadurch wird erreicht, daß im erhaltenen Formkörper das Molekularsiebmaterial bevorzugt an dessen Oberfläche vorhanden ist. Diese Materialwanderung während des Formgebungsverfahrens kann durch untershiedliche Dichte und Korngröße der Materialien beeinflußt werden. Der Feuchtigkeitsgehalt der zu verarbeitenden Mischung hängt einerseits von der Zusammensetzung der zu formenden Mischung ab und andererseits von der Art der Formung. Erfolgt die Formung beispielsweise durch Beschichten eines vorbereiteten Katalysatorträgers, dann ist der Feuchtigkeitsgehalt insbesondere Wassergehalt natürlich wesentlich höher als beim Formen unter Druck. Der Feuchtigkeitsgehalt einer unter Druck zuformenden Mischung liegt vorzugsweise im Bereich von 10 -40 Gew.-%, bezogen auf die zu formende Masse.

Molekularsiebe verlieren ihre Molekularsiebeigenschaften erst bei Temperaturen im Bereich von 900 °C. Die zu formende, insbesondere das Bindemittel enthaltende Mischung wird deshalb vorzugsweise so eingestellt, daß die unter ihrer Verwendung hergestellten Katalysatorkörper bis zu diesen Temperaturen beständig und einsatzfähig sind. So kann auch das Trocknen und Härten der Katalysatorkörper bei Temperaturen bis ca. 800 °C vorgenommen werden. In entsprechender Weise wird mit Vorteil ein Bindemittel verwendet, daß bis zu diesen Temperaturen sowohl chemisch als auch physikalisch stabil ist, also auch noch nicht sintert. Als Bindemittel eignen sich, wie bereits erwähnt, keramisch plastische, besonders tonige Materialien, da diese bereits im ungebrannten Zustand Bindemitteleigenschaften entwickeln. Das Trocknen bei Temperaturen bis 800 °C soll ja noch nicht zu einem Brennen der Materialien und damit zu einem Sintern führen. Solche keramische Materialien eignen sich sowohl als Bindemittel für eine Oberflächenbeschichtung als auch für die Formung des Katalysators aus einer zeolithhaltigen Masse. Die Trocknung kann mit Heißluft, IR-Strahlung und/oder Mikrowelle vorgenommen werden, ggf. im Rahmen einer Gefriertrocknung.

Wie bereits erwähnt, wurde gefunden, daß durch die Wahl der Korngröße die Eigenschaften des erhaltenen Formkörpers beeinflußt werden können. Dabei erweist es sich als besonders vorteilhaft, wenn das Zeolithmaterial eine kleinere Korngröße hat als das Bindemittel. Zweckmäßigerweise sollte jedoch die Korngröße des Bindemittels nicht mehr als 10 Mal so groß sein wie die des Zeolithmaterials. Das Bindemittel liegt vorzugsweise mit einer Teilchengröße im Bereich von 1 -150 $\mu$m, insbesondere 50 -120 $\mu$m vor. Die Korngröße des Zeolithmaterials liegt vorzugsweise im Bereich von 0,1 -100 $\mu$m, insbeson-

dere 2 -20 μm. Weiterhin ist es erwünscht, wenn die Obergrenze der Teilchengröße des Zeolithmaterials umso kleiner ist, je dünner die Wandstärke des Wabenkörpers ist.

Es wurde gefunden, daß die Zerkleinerung von üblichem Zeolithmaterial auf eine gewünschte Obergrenze im Rahmen eines Sprühtrocknungsprozesses durchgeführt werden kann. Hierzu wird das zeolithische Material in einer Mischeinrichtung mit einem flüssigen Medium aufgeschlämmt und dann in einen Sprühtrockner eingeführt. Dabei hat sich herausgestellt, daß durch das Einsprühen und Trocknen ein Zeolithmaterial erhalten wird, das eine weitgehend einheitliche Korngröße besitzt. Je nach Wahl der Sprühbedingungen kann diese Korngröße eingestellt werden.

Gleichzeitig mit der Aufschlämmung und der Sprühtrocknung können auch noch andere Verfahrensschritte durchgeführt werden. So kann der Ionenaustausch durch Einbringen von anderen Kationen in die Aufschlämmung vollzogen werden. Bei einem kontinuierlichen oder diskontinuierlichen Lösungsmittelwechsel erfolgt der Ionenaustausch quantitativ. Da nach der Erfindung schon Austauschraten von 5 -15 % zur Herstellung eines hochaktiven und selektiven Molekularsieb-Katalysators ausreichen können, kann auf den Lösungsmittelwechsel auch verzichtet werden. Für den Vollzug des Ionenaustausches reichen bereits Verweilzeiten im Mischer von wenigen Sekunden bis zu einigen Minuten aus. Die Mischung kann dann in den Sprühtrockner gefördert und verspritzt werden.

Es its weiterhin mit Vorteil möglich, die Einbringung von besonderen katalytisch wirksamen Substanzen in den Zeolith im Zusammenhang mit der Vermischung und Sprühtrocknung durchzuführen. Vorzugsweise werden Materialien der Nebengruppen VI und VIII des periodischen Systems in Form von leichtlöslichen Verbindungen, ggf. zusammen mit den auszutauschenden Kationen, in die Zeolithaufschlämmung eingebracht. Hierbei ist die gleichzeitige Zugabe von Ammoniak oder Salmiak bevorzugt. Es hat sich dabei überraschenderweise gezeigt, daß die Metallionen, insbesondere bei gleichzeitigem Ionenaustausch, vorzugsweise in den Poren (Kavernen) des Molekularsiebes eingelagert werden. Im nachfolgenden Sprühtrocknungsverfahren in reduzierender Atmosphäre, insbesondere aufgrund des anwesenden Ammoniaks, werden die katalytisch wirksamen Metallionen in den Poren in die metallische Form überführt. Sofern erwünscht, kann auch eine Überführung in oxydativer Atmosphäre in die Metalloxidform vorgenommen werden. Die Sprühtrocknung und die ihr vorhergehende Durchmischung des Zeolithmaterials können somit zur gleichzeitigen Korngrößeneinstellung den Ionenaustausch, der Belegung mit katalytisch aktivem Material und/oder der Aktivierung des Materials herangezogen werden. Die Belegung der Poreninnenseiten (inneren Oberfläche) des Zeoliths mit dem katalytisch aktiven Material hat nicht nur den bereits erwähnten Vorteil der Erhöhung der Selektivität. Vielmehr kann in vielen Fällen auch eine Vergiftung des katalytisch aktiven Materials verhindert werden und zwar dann, wenn die die Vergiftung bewirkenden Stoffe in ihrer Molekülgröße größer sind als die eingestellten Fenster des Zeolithmaterials. Damit sind ganz erhebliche Kosteneinsparungen verbunden, weil einerseits das Katalysatormaterial nicht so oft ausgetauscht zu werden braucht, andererseits teuere, hochaktive Katalysatormaterialien, wie z.B. Platin und Vanadiumoxid, verwendet werden können, ohne gefährdet zu sein.

Das durch die Sprühtrocknung aufbereitete Katalysatormaterial kann als solches in der erhaltenen Pulverform oder wie bereits erwähnt, nach einer Formgebung bzw. in Form einer Beschichtung, eingesetzt werden.

Molekularsiebe und damit auch Zeolith ergeben beim Aufbringen auf vorgefertigte Katalysatorträger schlechte Beschichtungen, da sie nicht haften und auch in sich keinen Verbund zeigen. Es wurde jedoch gefunden, daß die Mischungen aus Zeolith in Verbindung mit Bindemittel, insbesondere keramisch plastischem Material, gute Beschichtungen auf solchen Körpern, die im wesentlichen aus dem Bindemittel hergestellt und vorzugsweise gebrannt sind, ergeben. Auch hier kann das Zeolithmaterial in der vorbeschriebenen Weise durch Sprühtrocknung aufgearbeitet und vorbereitet sein. Die den Zeolith und das Bindemittel enthaltende Mischung kann im Tauchverfahren oder Spritzverfahren auf den Katalysatorträger, beispielsweise einen keramischen Formkörper aufgebracht und dann durch Trocknen gebunden werden. Auch hier ist der Formkörper vorzugsweise wabenförmig ausgebildet.

Für die Herstellung von Katalysatorkörpern durch Formgebung einer Masse, die Zeolith und Bindemittel enthält und durch Zugabe eines flüssigen, insbesondere wäßrigen Mediums plastisch verformbar eingestellt ist, eignet sich besonders das Extrusionsverfahren durch eine Düse, deren Öffnungsquerschnitt die Querschnittsgröße und Form des extrudierten Katalysators bestimmt. Je filigraner, d.h. je dünnwandiger der Formkörper sein soll, desto kleiner wird vorzugsweise die Korngröße des Zeolithmaterials eingestellt. Insbesondere bei einem Wabenkörper mit einem Öffnungsquerschnitt von mehr als 80 % und Wandstärken unter 1 mm, sollte die Korngröße des Zeolithmaterials unter 100 μm insbesondere im

Bereich zwischen 2 und 20 μm liegen. Das als Bindemittel verwendete keramische, plastische Material, insbesondere Tonmaterial, das vorzugsweise mehr als 1 % $TiO_2$-Anteile enthält, kann mit dem Zeolithmaterial trocken vermischt werden. Es ist jedoch auch eine Mischung in Suspension oder in angeteigtem Zustand möglich. Formkörper, insbesondere Wabenkörper, die für den Einsatz bei der Rauchgasreinigung, Entstickung u.dgl. be stimmt sind, können die üblichen Abmessungen von 15 cm x 15 cm x 100 cm haben, d.h. einen rechteckigen Querschnitt besitzen.

Aufgrund der geringen Formstabilität von Wabenkörpern mit Öffnungsquerschnitten von mehr als 80 %, insbesondere solchen aus Zeolith ist es jedoch mit Schwierigkeiten verbunden, derartig lange Formkörper herzustellen, ohne daß die Gefahr der Verformung oder Rißbildung besteht.

Bei der erfindungsgemäßen Vorrichtung zur Herstellung der Formkörper ist der Extrusionseinrichtung deshalb eine Unterstützungseinrichtung für den extrudierten Formkörper zugeordnet. Diese Unterstützungseinrichtung ist im wesentlichen unmittelbar hinter der Düse des Extruders angeordnet. Die Unterstützungseinrichtung stützt den extrudierten Formkörper während der fortschreitenden Bewegung mindestens so lange, bis der Formkörper von Extruder abgetrennt ist. Die Unterstützungseinrichtung hat vorzugsweise die Form der Unterseite des Formkörpers, so daß der Formkörper auf seiner gesamten Unterseite gestützt wird. Dabei ist die Düsenplatte bei unrunden Querschnitten vorzugsweise so im Extruder angeordnet, daß die horizontale Querschnittsabmessung des Formkörpers und damit die unterstützbaren Flächen möglichst groß sind. Bei einem im Querschnitt mehreckigen, insbesondere viereckigen Katalysatorkörper ist die Extruderdüse somit vorzugsweise so angeordnet, daß eine Längskante des extrudierten Formkörpers unten liegt, so daß der Formkörper an zwei benachbarten Längsseiten unterstützt werden kann. Die Unterstützungseinrichtung kann als Förderband ausgebildet sein. Vorzugsweise ist die Unterstützungseinrichtung von unten her mit einem Fluid durchströmbar, so daß der Katalysatorkörper - schwimmend gelagert wird. Der Vorwärtsbewegung auf der Unterstützungseinrichtung wird dann durch die Vorschubbewegung des Extruders bewirkt. Ist der Formkörper vom Extruder abgelängt, dann kann der Formkörper auf die Unter stützungseinrichtung abgesenkt und mit dieser transportiert, beispielsweise in den Trockenofen gebracht werden. Auf diese Weise ist es möglich, trotz der geringen Festigkeit der extrudierten Masse sehr feine und einen sehr großen Öffnungsquerschnitt aufweisende Wabenkörper herzustellen.

Weitere Merkmale der Erfindung ergeben sich aus der nachfolgenden Beschreibung von bevorzugten Ausführungsformen in Verbindung mit den Unteransprüchen und der Zeichnung. Hierbei können die einzelnen Merkmale jeweils zu mehreren oder für sich alleine bei einer Ausführungsform der Erfindung verwirklicht sein.

In der Zeichnung zeigen:

Fig. 1 eine im Anschluß an einen Extruder verwendbare Unterstützungseinrichtung für noch nicht gehärtete instabile Wabenkörper;

Fig. 2 eine andere Ausführungsform einer ähnlichen Unterstützungseinrichtung;

Fig. 3 und 4 Ansichten von verschiedenen Katalysatorkörpern,

Fig. 5 eine Durchführung eines Katalysators durch eine Stützwand mit Verschlußklappe, und

Fig. 6 ein Fließschema für den Einsatz erfindungsgemäßer Katalysatorkörper bei der Reinigung von Rauchgas.

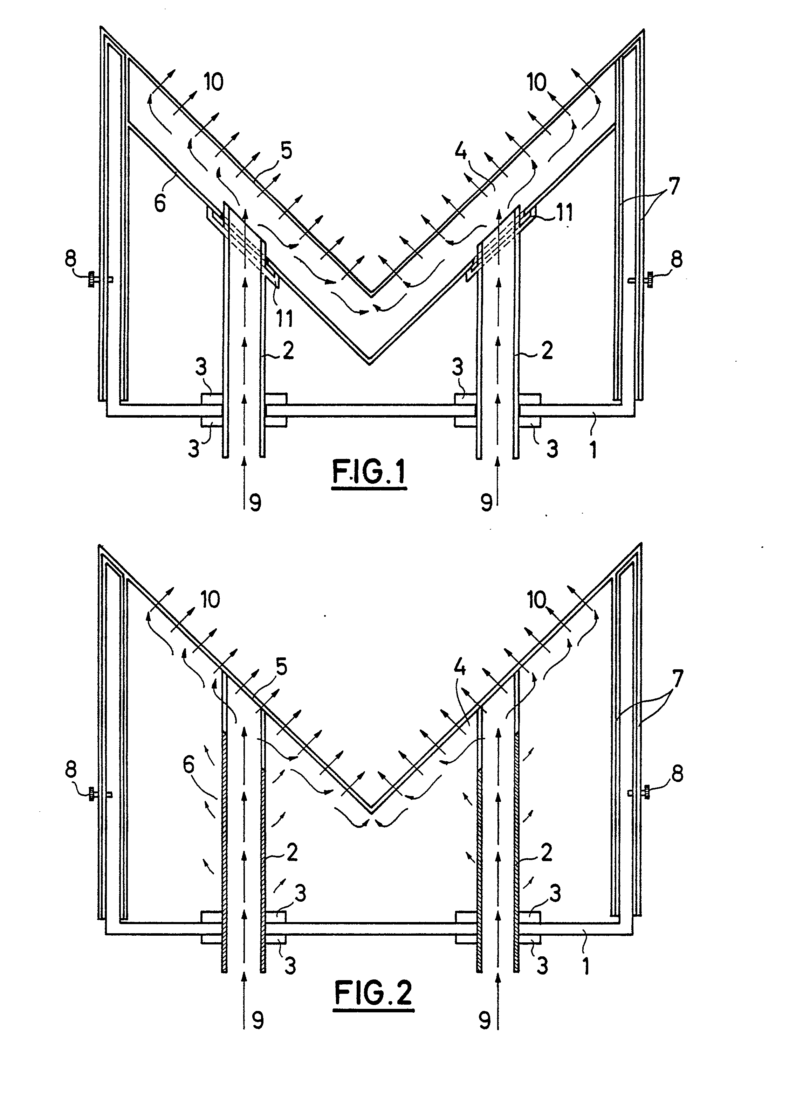

Bei der Ausführungsform nach den Fig. 1 und 2 ist ein Extruder vorgesehen, der eine Austrittsdüse zum Extrudieren eines Katalysatorkörpers mit Wabenstruktur besitzt, wobei der Katalysatorkörper einen quadratischen Querschnitt hat. Dabei ist die in der Zeichnung nicht dargstellte Düse so am Extruder ausgerichtet, daß die Längskanten des aus der Düse austretenden Katalysatorkörpers oben und unten bzw. an den beiden Seiten liegen. Dadurch wird ein Maximum von unterstützbarer Fläche gebildet, weil zwei nebeneinanderliegende Flächenseiten abstützbar sind. In entsprechender Weise ist dann die Lager-bzw. Unterstützungseinrichtung für den Formkörper ausgbildet.

Die in Fig. 1 dargestellte Unterstützungseinrichtung besitzt einen rinnenförmigen Wannenkörper 1, durch dessen Boden Rohre 2 hindurchtreten und mit Verbindungselementen 3 am Boden abdichtend befestigt sind. Auf den Wannenkörper ist ein mobiles, nach oben abnehmbares Hohlprisma aufgesetzt, das eine Auflagefläche in Form einer Rinne mit rechtwinkligem Querschnitt und einem im Abstand darunter angeordneten Boden mit ebenfalls rechtwinkligem Querschnitt aufweist. Die Auflagefläche 5 des Hohlprismas besitzt Durchtrittsöffnungen für Gase bzw. Flüssigkeiten und besteht beispielsweise aus einer mit Perforationen versehenen oder porös ausgebildeten Platte bzw. einer Siebplatte. Die Bodenplatte 6 des Hohlprismas besitzt Durchlässe für die Durchführung der Rohre 2. Das Hohlprisma 4 ist an seinen Außenrändern mit nach unten ragenden, nutförmigen Labyrinthdichtungen 7 versehen, mit denen es die Seitenwände der Wanne 1 abdichtend übergreift. Mit Verbindungselementen 8 kann das an sich auf der Wanne längs verschiebbare Hohlprisma an den Wannenrändern festgelegt werden. In Richtung der Pfeile 9 und 10 kann ein Fluid durch die Rohre 2 und das Hohlprisma 4 hindurchgeleitet werden, wobei es auf dem Hohlprisma 4 ein Fluidkissen für den den Extruder verlassenden Katalysatorkörper bildet. Die oberen Enden der Rohre 2 tragen weiterhin noch flanschartige Ansätze 11, die eine Auflage für das Hohlprisma 4 bilden.

Die Prismenauflage bzw. die mobile Prismenkammer 4 besteht vorzugsweise aus hitzebeständigem Material. Auf der Prismenauflage wird der extrudierte Katalysatorkörper vorzugsweise - schwimmend gelagert, bis der Strang vom Extruder abgeschnitten ist. Dann kann der Zufluß des gasförmigen bzw. flüssigen Mediums durch die Zuleitungsrohre 2 abgestellt werden, so daß sich der Körper auf die Auflagefläche des Prismenkörpers absenkt. Zusammen mit dem Prismenkörper kann der Katalysatorkörper dann in einen Trocknungsofen gefahren werden und verbleibt auf diesem, bis er seine gewünschte Festigkeit erhalten hat.

Bei der Ausführungsform nach Fig. 2 sind einander entsprechende Teile mit den gleichen Bezugszeichen versehen wie bei Fig. 1. Der Unterschied gegenüber der Ausführungsform nach Fig. 1 besteht im wesentlichen darin, daß der winkelförmige Prismenkörper 4 lediglich die poröse Auflagefläche 5 für den Katalysatorkörper aufweist. Die zusätzliche Bodenplatte 6 ist weggefallen. Die Rohre 2 münden in den Innenraum der Wanne 1, so daß das gasförmige bzw. flüssige Medium aus dem Innenraum der Wand durch die Öffnungen der Auflagefläche 5 austritt und das Polster für die - schwimmende Lagerung des Katalysatorkörpers bildet.

Als Fluid für die schwimmend Lagerung des extrudierten katalysatorkörpers werden vorzugsweise Druckluft, die auch mit Schmierstoffen versehen sein kann oder Dampf verwendet. Auch Flüssigkeiten, wie Öl sind zur Lagerung geeignet.

Durch die Vergrößerung der Auflagefläche wird der Auflagedruck verringert, so daß eine Deformierung des instabilen Katalysatorkörpers nach Verlassen des Extruders nicht zu befürchten ist.

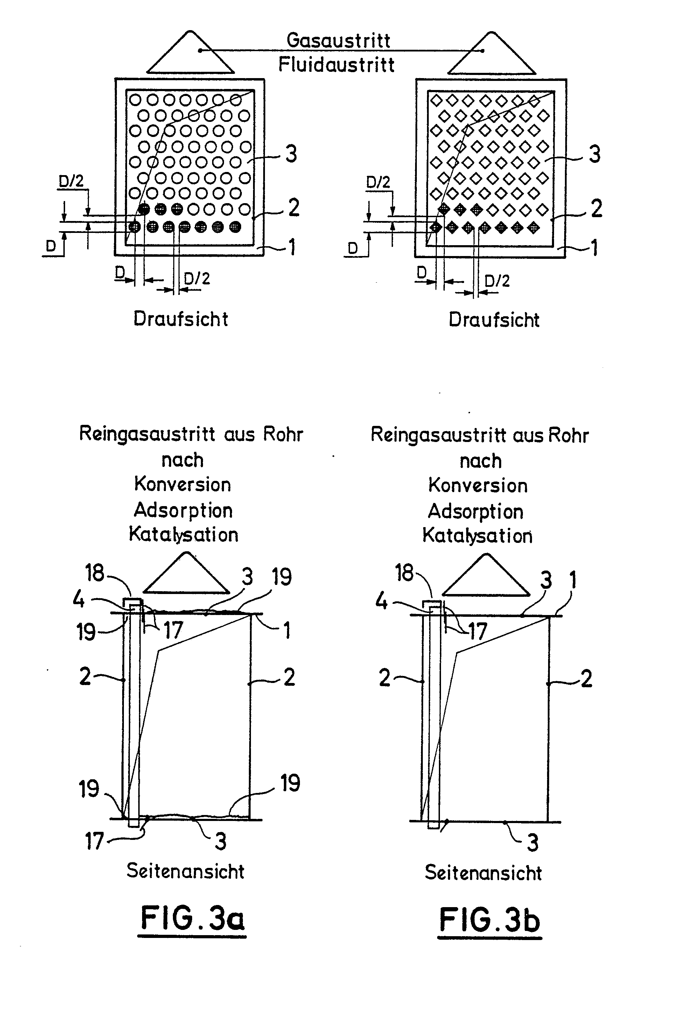

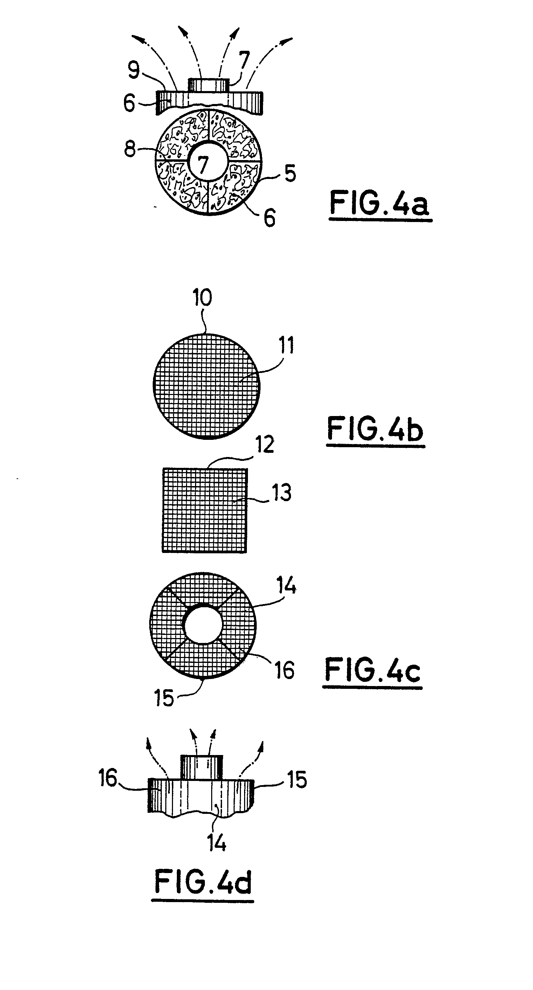

Die Fig. 3a und 3b sowie 4a, b, c und d zeigen Rekuperator-Stofftrennmodule mit Einzelrohren, die ohne Betriebsunterbrechung austauschbar sind. Ein Zargengehäuse 1 aus Blech, Beton, Schamott oder Steinzeug mit parallelen Seitenwänden 2 aus den entsprechenden Materialien, weist stirnseitige Abdeckwände 3 auf, die ebenfalls aus Blech, Beton, Schamott oder Steinzeug bestehen und Durchtrittsöffnungen für Katalysatorrohre 4 aufweisen. Diese Katalysatorrohre dienen gleichzeitig zur Wärmeübertragung und zur Stofftrennung und bestehen beispielsweise aus Zeolithscherben. Die Rohre haben eine Länge von 100 -5000 mm und ein Gewicht von 8 -20 kg je 5000 mm. Die Zeolithscherben können als Wabenkörper ausgebildet sein.

Die Rekuperator-Stofftrennmodule können so ausgebildet sein, daß sie auch in Querrichtung durchströmbar sind. Hierzu kann die Blechzarge unterbrochen sein, so daß die einzelnen Wärmeübertragungsrohre mit Querströmen umspülbar sind.

Gemäß Fig. 4a kann ein Wärmeübertragungsrohr auch so ausgebildet sein, daß es zwei konzentrisch ineinander angeordnete Rohrkörper 5 und 7 umfaßt, wobei der äußere Rohrkörper mit katalytisch wirksamem Material in Form von Pellets, Schüttgut oder Wabenstruktur gefüllt sein kann. Die Rohre 5 und 7 können aus Metall, Chemiewerkstoff, Keramik, Betonsteingut oder Zeolith bestehen. Zusätzlich können radiale Wärmebrücken 8 die Rohre 5 und 7 miteinander verbinden und das Rohr 5 in verschiedene Sektoren unterteilen. Der Außenmantel des Rohres 5 kann ebenfalls zur Wärmeübertragung herangezogen werden. Das Rohr 5 kann einen freien Querschnitt von beispielsweise 20 -90 % je nach Art der Füllung bzw. seiner Struktur haben. Der stirnseitige Rand des Rohres 5 kann mit einer Gazeabdeckung 9 versehen sein, um einerseits das Füllmaterial einzuschließen und eine Abdichtung zu schaffen.

Bei der Ausführungsform nach den Fig. 4b und c handelt es sich um Wabenkanäle 10 bzw. 12, bei denen der Wärmeaustausch über den Außenmantel erfolgt. Die Kanäle können runden oder viereckigen Querschnitt besitzen und eine Länge von 100 mm 5000 mm haben und ggf. aus mehreren Stücken zusammengesetzt sein. Der freie Querschnitt beträgt wiederum 20 -90 %. Die Wabenkörper bestehen aus denselben Materialien wie bei Fig. 3a und 3b. Die Füllung 11 bzw. 13kann aus Wabenkörpern oder Pellets oder Schüttgut unterschiedlicher Form bestehen.

Die Ausführungsform nach Fig. 4d besitzt wieder ein konzentrisches Innenrohr 14, das etwas länger ist als das Außenrohr 15. Das Außenrohr bzw. der Außenmantel 15 kann wieder aus denselben Materialien bestehen wie oben. Der Zwischenraum zwischen Innenrohr und Außenrohr ist mit Katalysatormaterial 16 gefüllt. Das Innenrohr kann auch exzentrisch im Außenrohr sitzen.

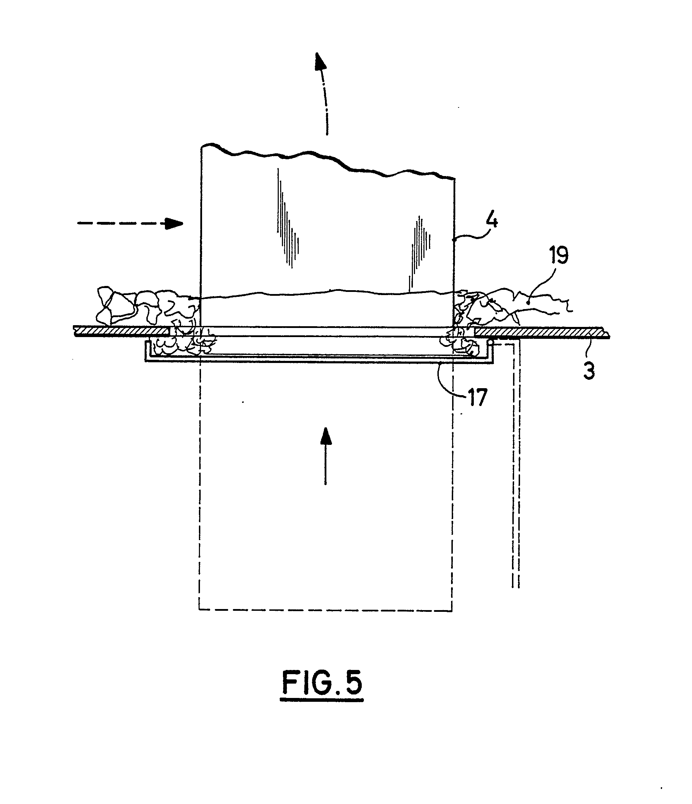

Fig. 5 zeigt die Durchführung eines Rohres 4 durch eine Trennwand 3 (vgl. Fig. 3a und 3b). Hierzu besitzt die Trennwand 3 einen Klappdeckel 17, der beim Durchstoßen des Rohres automatisch öffnet. Der Randbereich der Durchtrittsöffnung ist als Dehnungsfuge ausgebildet, die mit Dichtungsmaterial 19 beispielsweise in Form von Kohlefasergestrick, Keramik, Drahtgestrick o.dgl. verschlossen ist. Das Dichtungsmaterial dient gleichzeitig als Lagerung für das Rohr und als Schwingungsdämpfer.

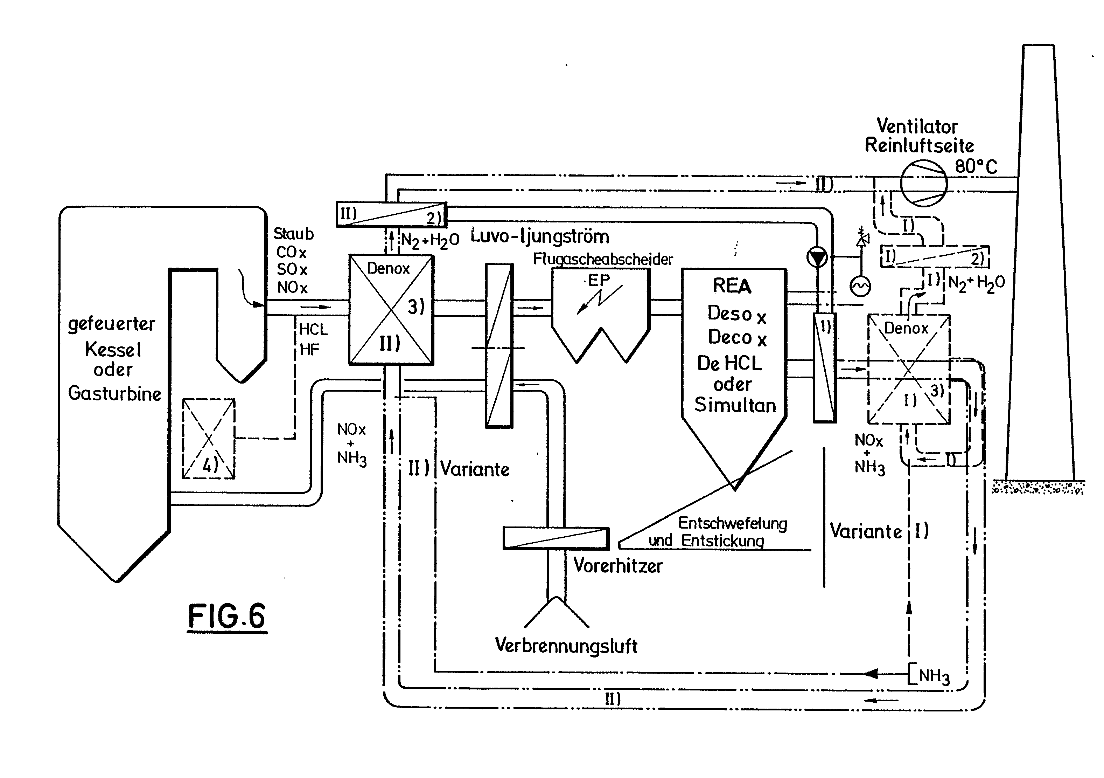

Fig. 6 zeigt den Einsatz der erfindungsgemäßen Katalysatoren bei der Entstickung von Rauchgas von Gasturbinen oder Kesseln. Dabei sind die Katalysatoren gleichzeitig als Stofftrenner und Rekuperatoren eingesetzt.

Erfindungsgemäß werden die Rohre in Form von Rund-, Oval-, Viereck-, Dreieck-und Vieleckrohren eingesetzt, nicht nur zur latenten Verdampferwärme und sensiblen, spezifischen Wärmerückgewinnung ohne Massestromvermischung, also bei Trennungen von zwei Masseströmen, die in Flußrichtung von der Erzeugung bis zum Kamin (AUSTRITT) jedoch nur verschiedene Abschnitte eines Gasstromes sein können, wie im Gasturbinen-oder Kessel-Rauchgasflußschema (Fig. 6) dargestellt, sondern auch zur Stoffkonvertierung und Strofftrennung, in Sequenz zu vor-oder nachgeschalteten Gasreinigungsverfahren, z.B. Entsalzen, Entschwefeln oder Entstauben. Die Rohre werden in einer Blech-, Beton-, Steinzeug-Zarge bzw. einem Keramik-oder Zeolithrahmen gefaßt und können somit auch als Luft-und Körperschalldämpfer dienen.

Die Rohrscherben (bearbeitete Keramik) bestehen aus Steinzeug und/oder Keramikmaterial, das auch mit Leicht-und Schwermetall angereichert, oder auch mit Zeolith beschichtet oder massiv aus Zeolith sein kann, wobei der katalytisch wirkende Zeolith unter 80 % und über 80 % freien Querschnittes im Innenwabenkörper, mit runden, kreisrunden, eckigen und vieleckigen Kanalwaben, haben kann. Die Rohre, in Rahmen gefaßt, bilden einen Rekuperator-Kreuzstromtauscher, eingesetzt nach Gasturbinen oder Kesselfeuerungen, wie nach Rauchgasflußschema (Fig. 6). Nach diesem Flußschema wird der Rekuperator-Kreuzstrom-Wärmetauscher, Schadstoffkonvertierer und Stofftrenner vor oder nach Rauchgasentschwefelungsanlage (REA) oder überhaupt ohne Rauchentschwefelungsanlage, als Komponente mit Wärmerückgewinnung in Symbiose betrieben, sowie zusätzlich als Schalldämpfer.

Mit der Schaltung nach Flußschema (Fig. 6) und dem gewählten Material wird erreicht, daß die Reaktionstemperatur für die Gasdenitrierung ohne die bisher notwendige zusätzliche Wiederaufheizung erzielt wird. Die notwendige Energie zur Erreichung der Reaktionstemperatur wird erfindungsgemäß aus dem Abgasstrom partiell oder ganz gewonnen.

Durch die Trennung der Gasströme mit unterschiedlichem Temperaturniveau im erfindungsgemäßen Rekuperator-Strofftrenner ist die Entfernung und/oder Konvertierung verschiedener Gasstrombestandteile in Sequenz ohne zusätzliche Anlagenkomponenten zur Zufuhr von Fremdenergie möglich.

Weiterhin wird u.a. bei Verwendung bekannter $V_2O_5$-haltiger Entstickungskatalysatoren im erfindungsgemäßen Rekuperator-Stofftrenner die teilweise Konvertierung von $SO_2$ zu $SO_3$, wie sie bei aus dem Stand der Technik bekannten De-$NO_x$-Anlagen (z.B. selektive, katalytische Reduktion - SCR auftreten, vermieden, da gemäß Flußschema - (Fig. 6) die selektive $NO_x$-Reduktion z.B. mit $NH_3$ erst nach der REA-Stufe erfolgt. Somit können unerwünschte Nebenreaktionen, die zur Katalysatorvergiftung und Wärmetauscherverstopfung führen, durch die gezielte Anordnung der verschiedenen Anlagenteile zur Schadstoffentfernung, wie sie bei Verwendung des erfindungsgemäßen Rekuperator-Stofftrenners erst möglich wird, vermieden werden. Bei Einsatz des Rekuperator-Stofftrenners, z.B. zur Entstickung, werden die Stickoxide ($NO_x$) in den darin befindlichen katalytisch wirksamen Rohrwabenscherben oder mit Katalysator-Pellets gefüllten Rohren oder Kassetten selektiv mit $NH_3$ zu $N_2$ und $H_2O$ konvertiert. Die Übertragung der Wärme vom heißen, ungereinigten Gasstrom auf den zu entstickenden, partiell gereinigten und abgekühlten Gasstrom kann hierbei im Kreuz-, Gleich-oder Gegenstrom erfolgen.

Hierbei wird die zu übertragende Wärme über das Außenrohr (Mantelrohr) auf den form-und kraftschlüssigen Rohrinnenwabenkörper oder mit Pellets gefüllten Rohren oder Kassetten übertragen, wobei es selbstverständlich auch möglich ist, Innen-und Außenfunktion der Rohre zu vertauschen.

Wie in Fig. 6 dargestellt, kann die Stickstoffreduzierung 3 alternativ an zwei Stellen vorgesehen sein, nämlich entweder nach Alternative I im Anschluß an eine Rauchgasentschwefe lung und gesonderte Aufheizung und anschließende Wärmerückgewinnung bei 2 oder nach Variante II im Kreuzstrom zum heißen, ungereinigten Rauchgas, das den gefeuerten Kessel oder die Gasturbine verläßt, also ebenfalls nach der Rauchgasentschwefelung.

Bei Variante II gelangt das Rauchgas nach Wärmeabgabe zur Stickstoffreduzierung in einen sog. Luvo-Ljungström-Luftvorwärmer (Wärmetauscher) und von da in einen Flugascheabscheider in Form eines Elektrofilters. Danach kann die Rauchgasentschwefelung (REA) durchgeführt werden ggf. mit nachgeschaltetem Staubfilter. Hier kann ggf. auch ein unerwünschter CO-Gehalt oder

HCl-Gehalt beseitigt werden. Nur bei Variante I wird im Anschluß daran das gereinigte Rauchgas durch einen Aufheizregister mit Wärmeträger geleitet.

Bei Variante I findet die $NO_x$-Reduzierung mit $NH_3$ nach Verlassen des Aufheizregisters statt. Das Abgas, das nunmehr anstelle von $NO_x$ und $NH_3$, $N_2$ und $H_2O$ enthält, kann dann über einen Ventilator dem Schornstein zugeführt werden.

Bei Variante II wird das $NO_x$-haltige Gas zusammen mit $NH_3$ im Kreuzstrom durch den Rekoperator 3 geleitet und dort durch die heißen, den Rekoperator durchströmenden Gase aufgeheizt, während gleichzeitig die Stickstoffreduzierung erfolgt.

Variante I und Variante II können auch als zweistufige Denox-Anlagen zusammen betrieben werden. Die Denox-Komponente kann auch zum Entschwefeln bzw. Entsalzen mit Zeolithen oder Molekularsieben eingesetzt werden. Als Denox-Komponente ist die Kreuzstrom-Denox-Energierückgewinnung auch hervorragend zur Luft-und Körperschalldämmung geeignet. Statt des Entstickens oder zusätzlich hierzu kann auch ein Entschwefeln erfolgen. Da das Abgas im Anschluß an die Entschwefelung relativ kühl ist, hat es ein kleineres Volumen als vor der Entschwefelung, so daß kleinere Katalysatoreinrichtungen ausreichen. Weiterhin findet bei Variante II eine Aufwärmung durch das ungereinigte heiße Abgas ohne Verschmutzungs-und Verstopfungsgefahr des Wabenkörpers statt. In entsprechender Weise eignet sich diese Ausführung auch für die Abgasreinigung bei Kraftfahrzeugen.

Es ist somit durch die Erfindung möglich, einen Rekuperator-Stofftrenner zur Energierückgewinnung zu schaffen, wobei durch den Wärmetauscher zwei voneinander getrennte Massenströme unterschiedlichen Wärmeinhalts geführt werden können und einem Massenstrom dabei simultan zur Wärmeübertragung bestimmte Stoffanteile entzogen werden können. Weiterhin können ein ungereinigter, heißer Rohrauchgasstrom und ein daraus folgender vorgereinigter, abgekühlter Rauchgasstrom simultan durch den Kreuzstrom-Rekuperator geleitet werden, wobei der vorgereinigte Gasstrom zur Aufheizung im Rekuperator-Wärmetauscher einer katalytischen Denitrierung -(z.B. SCR) unterworfen wird, und dieser Gasstrom anschließend in einem dem Rekuperator-Stofftrenner nachgeschalteten Wärmetauscher auf die jeweils notwendige Kamineintrittstemperatur abgekühlt wird. Als katalytisch wirksame Elemente können Rohre in Form von Rund-, Oval-, Viereck-, Dreieck-und Vieleckrohren eingesetzt werden, die gemäß Abb. 3 oder 4 als Wabenrohr ausführbar sind und eine freie Querschnittsfläche von 20 -90 % bei einer Wandstärke von 0,1 -1,0 mm aufweisen können. Die Rohre können auch als Doppelmantelrohr mit einer Füllung aus katalytisch wirksamen Pellets ausgebildet sein.

Auch können die katalytisch wirksamen Elemente bzw. Rohre in einer Zarge durch eine Vielzahl von Lochplatten geführt und dort mit Hilfe von Dichtungselementen in Form von Gestricken o.dgl. schwingungsfrei und kraftschlüssig gelagert sein. Dabei können den Rohrenden selbstschließende Abdichtklappen zugeordnet sein, so daß der Austausch einzelner Rohre bzw. Elemente während des Betriebes der Anlage möglich ist.

Gemäß der Erfindung sind Katalysatorkörper mit einer Vielzahl von parallelen Durchgangskanälen, hohem Durchgangsquerschnitt (über 80 %) und dünnen Wandstärken 0,05 -0,8 mm, insbesondere 0,2 -0.75 mm herstellbar.

Folgende Beispiele zeigen, daß sich dabei ein günstiges Verhältnis von Katalysatoroberfläche zu Katalysatorvolumen ergibt, das durch das Verhältnis von in der Querschnittsebene liegenden Wandungssteglänge zur Querschnittsfläche ausgedrückt werden kann.

| Beispiel | 1 | 2 | 3 |
|---|---|---|---|
| a) Kanalquerschnitt 22500 mm$^2$ (150x150 mm) | 22 500 | 22 500 | 22 500 |
| b) Anzahl der Kanäle | 400 | 600 | 800 |
| c) Innenumfang der Kanäle (mm) | 28 | 20 | 14 |
| d) Stärke der Kanalwandung (mm) | 0,7 | 0,4 | $<0,3$ |
| e) Verhältnis $\dfrac{b \cdot c}{a}$ | 0,498 | 0,533 | 0,498 |

**Ansprüche**

1. Katalysator, insbesondere für die Abgasreinigung, dadurch gekennzeichnet, daß er mindestens teilweise aus geformtem Zeolith besteht.

2. Katalysator nach Anspruch 1, dadurch gekennzeichnet, daß er Durchtrittskanäle für mindestens einen Fluidstrom aufweist, insbesondere ein Wabenkörper ist und vorzugsweise Durchtrittskanäle für mindestens zwei voneinander getrennte Fluidströme aufweist.

3. Katalysator in Form eines Wabenkörpers, insbesondere nach einem der Ansprüche 1 bis 3, dadurch gekennzeichnet, daß er einen freien Durchgangsquerschnitt für Fluide von über 80 %, vorzugsweise 85 -95 % besitzt.

4. Katalysator nach einem der vorhergehenden Ansprüche, dadurch gekennzeichnet, daß die Wandstärke der Waben im Bereich von 0,05 -1 mm, vorzugsweise 0,08 -0,8 mm liegt.

5. Katalysator nach einem der vorhergehenden Ansprüche, dadurch gekennzeichnet, daß der Zeolith durch ein Bindemittel gebunden ist und der Zeolith an der Oberfläche des Körpers freiliegt.

6. Katalysator nach Anspruch 5, dadurch gekennzeichnet, daß das Bindemittel keramisch plastisches Material, vorzugsweise titanreicher Ton ist, insbesondere ein solcher mit einem Titanoxidegehalt von 2 -5 Gew.-%, berechnet als Titandioxid.

7. Katalysator nach einem der vorhergehenden Ansprüche, dadurch gekennzeichnet, daß er 1 -30 Gew.-%, insbesondere 5 -15 Gew.-% Zeolith und 99 -70 Gew.-%, insbesondere 95 -85 Gew.-% Bindemittel , bezogen auf die lufttrockene Gesamtmenge aus Zeolith und Bindemittel, enthält.

8. Katalysator, insbesondere nach einem der vorhergehenden Ansprüche, dadurch gekennzeichnet, daß der Zeolith ein solcher vom Faujasit-Typ ist und/oder ein synthetischer Zeolith ist und insbesondere ein Natrium-Y-Zeolith ist, bei dem mindestens ein Teil, vorzugsweise 5 -15 % aller austauschbaren Natriumionen durch Ammoniumionen, Calciumionen und/oder Ionen von seltenen Erden ausgetauscht sind.

9. Katalysator nach einem der vorhergehenden Ansprüche, dadurch gekennzeichnet, daß der Zeolith mit katalytisch wirksamen Elementen oder Verbindungen belegt ist, wobei die katalytisch wirksamen Elemente oder Verbindungen vorzugsweise an den Innenwänden der Zeolithfenster vorhanden sind.

10. Verfahren zur Herstellung des Katalysators nach einem der vorhergehenden Ansprüche, dadurch gekennzeichnet, daß Zeolith zusammen mit einem Bindemittel in feuchtem Zustand geformt und getrocknet wird.

11. Verfahren nach Anspruch 10, dadurch gekennzeichnet, daß die Mischung aus Zeolith und Bindemittel 10 -40 Gew.-% flüssiges Medium, insbesondere Wasser, bezogen auf das Gesamtgewicht der Mischung aus Zeolith, Bindemittel und flüssiges Medium, enthält.

12. Verfahren nach Anspruch 10 oder 11, dadurch gekennzeichnet, daß das Trocknen bei Temperaturen bis 800 °C, insbesondere zwischen 500 °C und 750 °C erfolgt und ein Bindemittel verwendet wird, das bei der Trocknung vorzugsweise noch nicht sintert.

13. Verfahren nach einem der Ansprüche 10 bis 12, dadurch gekennzeichnet, daß der Zeolith in einer feineren Körnung eingesetzt wird als das Bindemittel.

14. Verfahren nach einem der Ansprüche 10 bis 13, dadurch gekennzeichnet, daß der Zeolith durch Sprühtrocknung aufbereitet wird, insbesondere auf seine Korngröße zerkleinert wird.

15. Verfahren nach einem der Ansprüche 10 bis 14, dadurch gekennzeichnet, daß der Körper durch Extrusion durch eine Düsenplatte insbesondere zu einem Wabenkörper geformt wird und vorzugsweise der extrudierte Katalysatorkörper nach dem Austritt aus der Extruderdüse mindestens so lange unterstützt wird, insbesondere auf einem Fluid schwimmend gelagert wird, bis er von der Düsenplatte abgetrennt ist, wobei ein Katalysatorkörper mit einem mehreckigen Querschnitt vorzugsweise an mindestens zwei benachbarten Flächenseiten unterstützt wird.

16. Vorrichtung zur Durchführung des Verfahrens nach Anspruch 15, dadurch gekennzeichnet, daß dem Extruder im Anschluß an die Düsenplatte eine Unterstützungseinrichtung zugeordnet ist, deren Unterstützungsfläche nicht eben und im Querschnitt den unteren Umrißlinien des den Extruder verlassenden Katalysatorkörpers angepaßt ist.

17. Vorrichtung nach Anspruch 16, dadurch gekennzeichnet, daß die Unterstützungsfläche Perforationen aufweist, durch die ein Fluid, insbesondere ein Gas, zur Erzeugung eines Fluidisierungsbettes für den Katalysatorkörper hindurchleitbar ist, wobei die Fluidzuführungseinrichtung vorzugsweise mit einer Einrichtung zum Abtrennen des Katalysatorstranges von der Düsenplatte gekoppelt ist und der abgelängte Katalysatorkörper vorzugsweise zusammen mit der Unterstützungseinrichtung verfahrbar ist.

**FIG.1**

**FIG.2**

Gasaustritt
Fluidaustritt

3
2
D/2
D
1

D
D/2

Draufsicht

3
2
D/2
D
1

D
D/2

Draufsicht

Reingasaustritt aus Rohr
nach
Konversion
Adsorption
Katalysation

18
4
19
3 19
17
1
2
2
19
19
17
3

Seitenansicht

Reingasaustritt aus Rohr
nach
Konversion
Adsorption
Katalysation

18
4
3 1
17
2
2
3

Seitenansicht

**FIG.3a**

**FIG.3b**

0 205 813

FIG.4a

FIG.4b

FIG.4c

FIG.4d

**FIG.5**

Ventilator Reinluftseite

80°C

$N_2 + H_2O$

Denox

I)

NOx + NH3

NH3

Variante I)

REA

Deso x
Deco x
De HCL
oder
Simultan

Entschwefelung und Entstickung

Vorerhitzer

Verbrennungsluft

Luvo-Ljungström

Flugascheabscheider

EP

II)

Variante

II) Variante

$N_2 + H_2O$

Denox

3)

II)

NOx + NH3

Staub
COx
SOx
NOx

HCL
HF

4)

gefeuerter Kessel oder Gasturbine

**FIG.6**